# EUROPEAN PATENT SPECIFICATION

(11) **EP 4 385 708 B1**
(45) Date of publication and mention of the grant of the patent: **12.08.2026**
(21) Application number: 22306863.6
(22) Date of filing: 13.12.2022
(51) Int. Cl.: B29C 64/10, G02C 7/02, B29D 11/00, B29C 64/264, B29C 64/124, B33Y 10/00, B33Y 80/00

(54) **METHOD FOR ADDITIVELY MANUFACTURING AN OPHTHALMIC DEVICE AND MANUFACTURING SYSTEM CONFIGURED TO CARRY OUT SUCH A METHOD**
VERFAHREN ZUR GENERATIVEN FERTIGUNG EINER OPHTHALMISCHEN VORRICHTUNG UND FERTIGUNGSSYSTEM ZUR DURCHFÜHRUNG SOLCH EINES VERFAHRENS
PROCÉDÉ DE FABRICATION ADDITIVE D'UN DISPOSITIF OPHTALMIQUE ET SYSTÈME DE FABRICATION CONÇU POUR METTRE EN UVRE UN TEL PROCÉDÉ

(43) Date of publication of application: 19.06.2024
(73) Proprietor: Essilor International, 94220 Charenton-Le-Pont (FR)
(72) Inventor: LECOMPERE, Maxime, 94700 MAISONS-ALFORT (FR); LEITE, Pierre, 91650 BREUILLET (FR); DIVO, Fabien, 95160 MONTMORENCY (FR)
(74) Representative: Santarelli

(56) References cited:
- WO-A1-2022/136407
- US-A1- 2016 311 184
- US-A1- 2022 118 705
- US-B2- 10 363 710

## Description

### FIELD OF THE DISCLOSURE

The disclosure relates to a method for additively manufacturing an ophthalmic device and a manufacturing system configured to carry out such a method.

The disclosure also relates to a command and control unit including system elements configured to run a computer program in order to implement at least some steps of the additive manufacturing method, and to a manufacturing system comprising such a command and control unit and configured for carrying out such a method.

The disclosure also relates to a computer program including instructions configured to implement the additive manufacturing of such a method, when said computer program is run by a computer, and to a client-server communication interface for transferring to a remote computer at least manufacturing data which are determined by a computer program that implements at least some parts of such a method, when said computer program is run in a command and control unit, the remote computer implementing the other parts of such method.

### BACKGROUND ART

Known methods for additively manufacturing of ophthalmic lenses comprise curing steps and layering steps which are performed successively in a manufacturing system which comprises a curing device, a layering device and a building platform located in relation to a vat filled with a predetermined material.

For instance, each ophthalmic lens is built layer by layer on the building platform which is movable relative to the vat including a volume of the predetermined material. The building platform is located in a predetermined position, the curing device including an irradiation source performs the curing step of a first layer of material, the layering device performs the layering step at least thanks to a displacement of the building platform so that a novel layer of material having a predetermined thickness can be cured, etc.

In other words, in such known methods, a curing step is performed on a layer which is for instance liquid for the plurality of ophthalmic lenses to be manufactured on the building platform. The liquid layer is thus hardened and next a layering step is performed for forming a new liquid layer on the previous hardened layer of the plurality of ophthalmic lenses to be manufactured.

International application WO2015004383A1 discloses a method for additively manufacturing an optical article, comprising a step of providing a starting optical system and a step of additively manufacturing layer by layer a complementary optical element on the starting optical element, which can be in an inclined position.

International application WO2015086981A1 discloses a method for additively manufacturing an optical article layer by layer, comprising the step of additively manufacturing an intermediate optical element in a manner such that the intermediate optical element is inclined relative to a predetermined additive construction axis referred to as a stratification axis along which a plurality of predetermined volume elements of at least one material is deposited so as to enable a polishing step in a specific zone.

International application WO2018235209A1 discloses a method for additively manufacturing an optical article layer by layer from a light-curable resin, using a micro mirror device, e.g. a DMD (Digital Micro mirror Device), for generating a desired shape light flux for irradiating the light-curable resin. The micro mirror device has a plurality of micro mirrors arranged in two-dimensional repetition structure. In the process of using DMD for light-curing the resin, in a projected region of the light-curable resin, an intensity of the projected light in a portion corresponding to an area of the micro mirror itself is different from that in a portion corresponding to an area between adjacent micro mirrors.

A further method is disclosed in US 2022/118705 A1 which discloses a method for producing an ophthalmic lens comprising an additive manufacturing step by depositing a plurality of optical elements of predetermined volume of at least one material.

### SUMMARY OF THE DISCLOSURE

The disclosure is directed to a method for additively manufacturing an ophthalmic device which is simple and convenient to carry out.

The disclosure accordingly provides a method for additively manufacturing an ophthalmic device to be worn by a wearer, the ophthalmic device being an ophthalmic lens for spectacles lenses and the method comprising: additively manufacturing a plurality of layers of a predetermined material in order to obtain the ophthalmic device, and determining a build inclination angle so that to direct disturbing diffracted rays of a beam of light on a dedicated zone located outside at least a zone of a retina of an eye of the wearer useful for vision when the ophthalmic device is worn by the wearer.

In the method according to the disclosure, the determination of the build inclination angle allows to direct the diffracted rays of light in the dedicated zone where the vision of the wearer is not impacted by these rays and/or wherein these rays do not hinder the wearer.

In this respect, the dedicated zone is generally at least outside the retina of the eye of the wearer, taking into account that the retina as such is not at all useful for clear vision.

Said otherwise, the dedicated zone is in particular at least outside of zones of the retina useful for clear vision.

More particularly, the dedicated zone can be outside a pupil of the eye of the wearer.

The dedicated zone can also be outside of the eye of the wearer as such.

The diffracted rays of light that are "redirected" are rays generated in the ophthalmic device by a stacking of layers.

These rays, which would reach the retina, or at least zones of the retina useful for clear vision or pupil of the eye, if they were not "redirected", would come from a virtual region of the ophthalmic device located outside an outline of the ophthalmic device.

These rays may be called disturbing rays.

Indeed, additively manufacturing the ophthalmic device layer by layer may imply some optical defects in some directions and which may create vision distortions.

The optical defects discussed here may be generated between the successive layers which are superimposed one to each other, not essentially between individual and adjacent volume elements, or voxels.

The inventors found that such optical defects might be due to a refractive index inhomogeneity at the junction of the layers.

In other words, a diffraction effect may thus appear, possibly leading to multiple diffractive orders in the ophthalmic device due to the repetitive repartition of such defect.

Some of these diffraction orders may have low intensity, being not perceived by human eye or only barely, while some of them may provide strong energy that will create strong visual distortion.

It is thus thought that the build by layering may create a diffractive structure generating optical defects.

Therefore, it is the goal of the method according to the disclosure to mitigate some optical defects, in particular the vision distortions generated by diffracted effects, formed inherently by the additive manufacturing of the ophthalmic device.

It is to be noted that in the method according to the disclosure, the optical defects are not deleted but hidden totally or at least partially for the wearer of the ophthalmic device.

In other words, the method according to the disclosure allows to direct the diffracted beam of light so that not to impact the vision of the wearer of the ophthalmic device.

The disclosure also provides a method for additively manufacturing an ophthalmic device to be worn by a wearer, the ophthalmic device being an ophthalmic lens for spectacles lenses and the method comprising: additively manufacturing a plurality of layers of a predetermined material in order to obtain the ophthalmic device, and determining a build inclination angle of the ophthalmic device which comprises the step determining at least one threshold angle value according to which disturbing diffracted rays avoid at least a zone of a retina of an eye of the wearer usable for vision when the ophthalmic device is worn by the wearer.

Such a threshold angle value may correspond to a transition between a configuration wherein the disturbing diffracted rays may reach the zones of the retina useful for vision and a configuration wherein such rays do not reach these zones of the retina.

In variant, a range of angle values can be determined.

Such a range of angle values can be convenient because a transition between a configuration wherein the disturbing diffracted rays may reach the zones of the retina useful for vision and a configuration wherein such rays do not reach these zones of the retina may occur at different inclination angle values.

The build inclination angle which is determined has a value upper or lower than the at least one threshold angle value and/or is not in the range of angle values, depending on whether the build inclination angle is determined with regard to the direction of an optical axis, or with regard to a surface of the ophthalmic device or a plane approximating such surface.

In any case, it is simpler to evaluate the build inclination angle from a point situated on the ophthalmic article, by opposition of using a point on the eye of the wearer.

Such a threshold angle value, or range of values, depends on some wearer parameters, such as parameters relating to the eye of the wearer as such and parameters relating to the arrangement of the ophthalmic device on the wearer.

In particular, the threshold angle value, or range of values, may depend on features such as dimensions and/or shapes of a pupil and/or of the retina of the wearer, and/or a final outline of the ophthalmic device, and/or a distance value between the pupil and the ophthalmic device when the latter is worn by the wearer.

For instance, one can determine how rays go through the pupil towards zones of the retina useful for vision, thanks to solid angles given for predetermined locations of the pupil and width thereof and one can determine the threshold angle value so as to avoid disturbing rays going through an optical center of the pupil, and/or in the pupil as such or even optionally so as to avoid that disturbing rays are directed towards zones of the retina useful for vision, and/or taking into account that the pupil is enlarged, such as for night vision.

All these parameters can be determined, that is to say provided or calculated as a raw value or as an average value.

One can otherwise considered that the threshold angle value may be defined between a stratification axis and an axis through both a center of the eye and an optical center of the ophthalmic device.

The method of the disclosure may comprise: additively manufacturing the plurality of layers of a predetermined material in order to obtain the ophthalmic device having an outline joining a first face and a second face opposite to the first face, and determining the build inclination angle so that the diffracted rays of a beam of light, that would reach the retina as described above, would come from an area located close to or outside the outline.

The ophthalmic device has a first face, a second face opposite to the first face and an outline joining the first face and the second face.

The outline can be defined as being a final contour of the ophthalmic device as it is intended to be worn by the wearer or as being an intermediate contour which is then edged to form the final contour.

Based on the above, the diffracted rays of a beam of light which would reach the retina, also called disturbing rays, would come from a peripheral zone of the ophthalmic device extending close to the intermediate contour and outside a main vision zone used by the wearer.

In other words, the disturbing rays that would reach a zone of the eyes (or the eyes as such) that would hinder the wearer, would have to be generated from the area located outside the final contour as it is intended to be worn by the wearer, if one extrapolate such rays from angles of the diffracted rays generated by the ophthalmic device.

Accordingly, as the disturbing (diffracted) rays would have to be generated from an area outside the final contour of the ophthalmic device, thanks to the determination of the build inclination angle, also called determined building orientation, said rays are not formed in the manufactured ophthalmic device.

Advantageous and convenient features of the manufacturing method are described below.

Each layer is manufactured either by projecting and polymerizing at least one image on a surface of a volume of the predetermined material, or by inkjet printing.

In case of manufacturing by projecting and polymerizing at least one image on a surface of a volume of the predetermined material, the method may comprise a step of varying a polymerization energy during curing.

The step of additively manufacturing a plurality of layers of a predetermined material is made substantially vertically and in an inclined manner.

The substantially vertically and inclined build of the ophthalmic device means that the latter is not built substantially horizontally from its first face to the second face.

Thus, the ophthalmic device to be manufactured comprises an optical axis through an optical center and distinct to the stratification axis.

The build inclination angle, here located between the optical axis and the stratification axis, is defined either relative to the stratification axis according to which the layers are built or relative to the optical axis of the ophthalmic device to be manufactured.

The above also means that the ophthalmic device is built according to an orientation of the device which is defined at least in function of a mean plane approximating the first face and the second face, which mean plane being substantially vertical or inclined as compared to a horizontal plan that is defined as being substantially perpendicular to the building direction or stratification axis.

Of course, the above takes into account that the first face and the second face are much larger than a thickness of the outline.

The method comprises the step of additively manufacturing a support on which the ophthalmic device is built vertically and in an inclined manner, the support comprising a maintaining face which has an inclination angle relative to the stratification axis which is function of the build inclination angle.

The inclination angle of the maintaining face is similar or different to the build inclination angle.

The method comprises the step of determining the build inclination angle at least in function of geometrical characteristics relating to an optical function of the ophthalmic device to be manufactured, and/or geometrical characteristics relating to a final contour of the ophthalmic device to be manufactured, and/or geometrical characteristics relating to a thickness of the layers, and/or parameters of the predetermined material, such as refractive index and/or composition thereof.

As explained above, the difference between the intermediate contour and the final contour corresponds to an edging of the ophthalmic device to conform its outline to a frame of spectacle lenses intended to be worn by the wearer and in which is mounted the ophthalmic device.

In other words, an opthalmic lens is manufactured by additive manufacturing with an intermediary contour and is intended to be later proceessed according to an edging step to reach the final contour that would enable it to be mounted in the aforementionned spectacles frame.

Alternatively, the ophthalmic lens may be manufactured by additive manufacturing with an intermediary contour that is already at the final contour that would enable it to be mounted in the aforementionned spectacles frame.

The method may further comprise a step of determining an angular orientation of the ophthalmic device to be manufactured, defined around an optical axis going through the optical center, at least in function of geometrical characteristics relating to an optical function of the ophthalmic device to be manufactured, and/or geometrical characteristics relating to a final contour of the ophthalmic device to be manufactured, and/or geometrical characteristics relating to a thickness of the layers, and/or parameters of the predetermined material, such as refractive index and/or composition thereof.

For instance, the angular orientation can be determined such that the ophthalmic device is built from a lower part to an upper part corresponding respectively to a bottom and a top of the device when mounted in a frame of spectacle lenses, or inversely, or from a nasal part to a temporal, or inversely, or from a part to another part located therebetween.

The method may further comprise steps of selecting at least one build inclination angle and determining at least one virtual zone on the ophthalmic device to be manufactured wherein the disturbing diffracted rays of the beam of light are directed, the at least one virtual zone including a region of interest located in the close vicinity of or outside a final contour of the ophthalmic device to be manufactured.

The region of interest is preferably defined outside a field vision, or field of view, of the wearer.

In other words, the goal is to determine and select the direction(s) where the diffracted rays of the beam of light can be rejected so that not to be visible by the wearer.

The method may further comprise a step of deducing an angular orientation of the ophthalmic device to be manufactured from the region of interest, corresponding to a selected build inclination angle.

These steps have to be understood like a "calibration sequence". A hypothetic build inclination angle is choosen, the virtual zone is determined and then the build inclination angle is confirmed or not, depending on the region of interest.

Such steps can also be carried out for determining the threshold angle value or range of values as described above.

The disclosure also provides, according to a second aspect, a command and control unit including system elements configured to run a computer program in order to implement each of the steps of a method for additively manufacturing an ophthalmic device to be worn by a wearer, the ophthalmic device being an ophthalmic lens for spectacles lenses and the method comprising: additively manufacturing a plurality of layers of a predetermined material in order to obtain the ophthalmic device, and determining a build inclination angle so that to direct disturbing diffracted rays of a beam of light on a dedicated zone located outside at least a zone of a retina of an eye of the wearer useful for vision when the ophthalmic device is worn by the wearer.

The disclosure further provides, according to a third aspect, a manufacturing system comprising a additive manufacturing module and a command and control unit as described above, the system being configured for carrying out the steps of the additive manufacturing method as described above.

The manufacturing system further comprises a curing device configured for projecting and polymerizing at least one image on a surface of a volume of the predetermined material and formed by a digital light processing unit and/or a stereolithography unit including a laser source and a scanning head, and/or an inkjet printing.

The disclosure also provides, according to a fourth aspect, a computer program including instructions configured to implement a method for additively manufacturing an ophthalmic device to be worn by a wearer, the ophthalmic device being an ophthalmic lens for spectacles lenses and the method comprising: additively manufacturing a plurality of layers of a predetermined material in order to obtain the ophthalmic device, and determining a build inclination angle so that to direct disturbing diffracted rays of a beam of light on a dedicated zone located outside at least a zone of a retina of an eye of the wearer useful for vision when the ophthalmic device is worn by the wearer, when said computer program is run in a command and control unit of a manufacturing system according to the third aspect.

The disclosure further provides, according to a fifth aspect, a client-server communication interface transferring to a remote computer of the client-server communication interface, at least manufacturing data, such as the determined build inclination angle, which are determined by a computer program that implements, when said computer program is run in a command and control unit of the client-server communication interface, at least some steps of a method for additively manufacturing an ophthalmic device to be worn by a wearer, the ophthalmic device being an ophthalmic lens for spectacles lenses and the method comprising: additively manufacturing a plurality of layers of a predetermined material in order to obtain the ophthalmic device, and determining a build inclination angle so that to direct disturbing diffracted rays of a beam of light on a dedicated zone located outside at least a zone of a retina of an eye of the wearer useful for vision when the ophthalmic device is worn by the wearer, the remote computer implementing the other steps of such additive manufacturing method, at least one of the remote computer and the command and control unit of the client-server communication interface being of a manufacturing system according to the third aspect.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for additively manufacturing ophthalmic devices.
Figure 2 diagrammatically shows a client-server communication interface comprising system parts configured for transferring at least one configuration parameter determined by the method according to the disclosure to a remote data processing system.
Figure 3 is a block diagram showing steps of the method for additively manufacturing an ophthalmic device according to the disclosure.
Figure 4 shows in section the ophthalmic device obtained thanks to the method according to the disclosure.
Figure 5 shows the ophthalmic device obtained thanks to the method according to the disclosure in relation to a wearer which wears the ophthalmic device.
Figure 6 shows in a front view the ophthalmic device.
Figure 7 is a block diagram showing further steps of the method for additively manufacturing an ophthalmic device according to the disclosure.
Figure 8 is a similar view of Figure 6, showing virtual zones on an ophthalmic device having a first optical function, in order to determine a build inclination angle.
Figure 9 is a similar view of Figure 8, for an ophthalmic device having a second optical function different to the first optical function.

### DETAILED DESCRIPTION OF EXAMPLE EMBODIMENTS

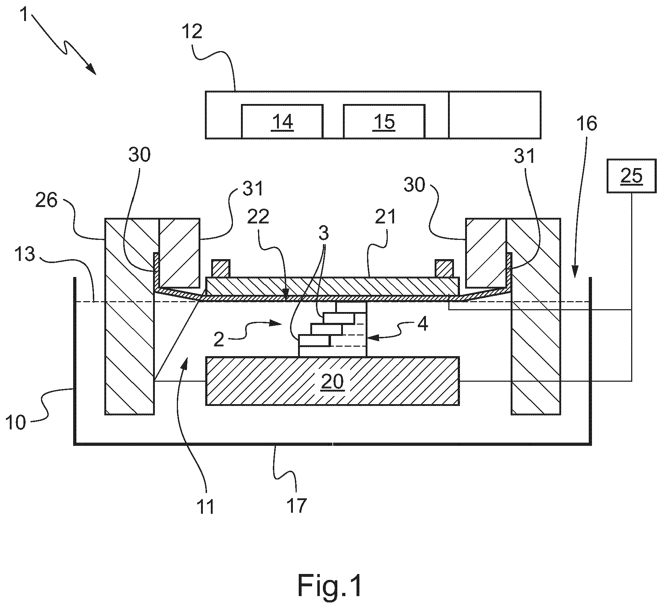

Figure 1 illustrates schematically a manufacturing system 1 configured to carry out a method for additively manufacturing ophthalmic devices 2.

In the illustrated embodiment, the manufacturing system 1 comprises a tank 10 filled with a volume of a predetermined material 11 suitable for manufacturing ophthalmic devices 2, such as a liquid resin for making eyeglasses.

The manufacturing system 1 is an additive system configured for manufacturing the ophthalmic devices 2 layer by layer, each layer 3 being formed by a volume of the predetermined material 11 at least partially polymerized and hardened.

In this respect, the manufacturing system 1 comprises an additive unit 12, also called additive manufacturing module, configured for projecting and polymerizing at least one image on a surface 13 of the volume of the predetermined material 11 in the tank 10.

The additive unit 12 may comprise a processing apparatus 14 having for instance a digital lighting processor which is configured for processing a single image, or pattern, and/or a plurality of images, or patterns.

The additive unit 12 may further comprise a projecting and polymerizing apparatus 15 configured for providing a curing energy, and having for instance a projector and a radiation source, or energy source, or other well-known sources for projecting the single image in a single direction toward the material 11 for each layer 3, and/or a plurality of images projected simultaneously of successively, and then polymerizing and hardening the material 11.

In variant, the digital lighting processor and polymerizing apparatus are replaced by a laser source and a scanning device which are configured for scanning with the laser source the surface 13 of the material 11.

In another variant which is not illustrated, the additive unit is an inkjet printer which is configured to project the material.

The additive unit 12 may further comprise a command and control unit 27 including system elements configured to run a computer program including instructions configured to implement each of the steps of the additive manufacturing method according to the disclosure for manufacturing the ophthalmic device 2.

The additive unit 12 is located on an upper side of the tank 10, and faces an upper opening 16 of the tank 10 which is opposite to a bottom 17 of the tank 10. Such arrangement allows carrying out a so-called top-down process, as explained below.

In another arrangement which is not illustrated, the additive unit can be located on a lower side of the tank, and faces a supplemental opening formed on the bottom of the tank to allow for instance the laser source to scan the surface of the material, here the bottom surface of the material within the tank. Such another arrangement allows carrying out a so-called bottom-up process, as also explained below.

The manufacturing system 1 further comprises a building platform 20 at least partially immersed in the tank 10, a transparent plate 21 and a flexible separation film 22 represented in Figure 1 as being laid on the transparent plate 21 and being in contact therewith.

The flexible separation film 22 faces the building platform 20 and the transparent plate 21 faces the additive unit 12.

The flexible separation film 22 is mechanically connected by ends 31 to a frame 30 of the manufacturing system 1.

The transparent plate can be made from glass or plastic, while the flexible separation film can be made for instance from polytetrafluoroethylene (PTFE). In variants, the flexible separation film can be made for instance from Teflon AF such as for instance AF 2400 or AF 1600, or perfluoroelastomers (PFE), polypropylene (PP), polyethylene terephthalate (PET), perfluoroalkoxy (PFA), or also from silicone, etc..

The additive unit 12 is thus configured for projecting at least one image, or pattern, on the surface 13 of the volume of the predetermined material 11 in the tank 10 for forming each layer 3 of the ophthalmic device 2 on the building platform 20, through the transparent plate 21 and flexible separation film 22, so that each layer 3 which is formed and at least partially hardened is sandwiched between the building platform 20 and the flexible separation film 22.

In particular, the additive unit 12 is able to transfer to the surface of the volume of the predetermined material, in an image or a pattern, a quantity of energy suitable to trigger polymerization of the predetermined material.

The additive unit 12 comprises a controller configured to form a plurality of images and/or at least a so-called grayscale image, for sending a determined and optionally variable quantity of energy.

The controller of the additive unit 12 may also be configured to vary the energy during curing, also called polymerization energy.

The manufacturing system 1 further comprises a moving unit 25 configured to move at least one of the building platform 20, the transparent plate 21 and the frame 30 one relative to the others.

The building platform 20, the transparent plate 21 and the flexible separation film 22 are each mounted, directly or indirectly, on a rigid body 26, and can also be mounted movable relative to the rigid body 26.

The moving unit 25 may act on the building platform 20, or on the transparent plate 21, or on the frame 30 bearing partially the flexible separation film 22, or on both of them. The moving unit 25 may act on the building platform 20, the transparent plate 21 and the flexible separation film 22 dependently or independently.

In particular, the moving unit 25 may be configured to:
- raise up or down the building platform 20 towards or remote to a bottom 17 of the tank 10; and/or
- raise up or down the transparent plate 21 towards or remote to the bottom 17 of the tank 10 and thus towards or remote to the building platform 20; and/or
- raise up or down the frame 36 to which the flexible separation film 22 is mechanically connected, towards or remote to the bottom 17 of the tank 10 in order to locate at least a part of the flexible separation film 22 in a position relative to both building platform 20 and transparent plate 21.

In an alternative embodiment, the moving unit 25 may be configured to raise up or down the tank 10 relative to at least one of the building platform 20, transparent plate 21 and frame 30 to which the flexible separation film 22 is mechanically connected.

In another alternative embodiment, the apparatus is devoid of a membrane or flexible separation film and rather comprises a recoater.

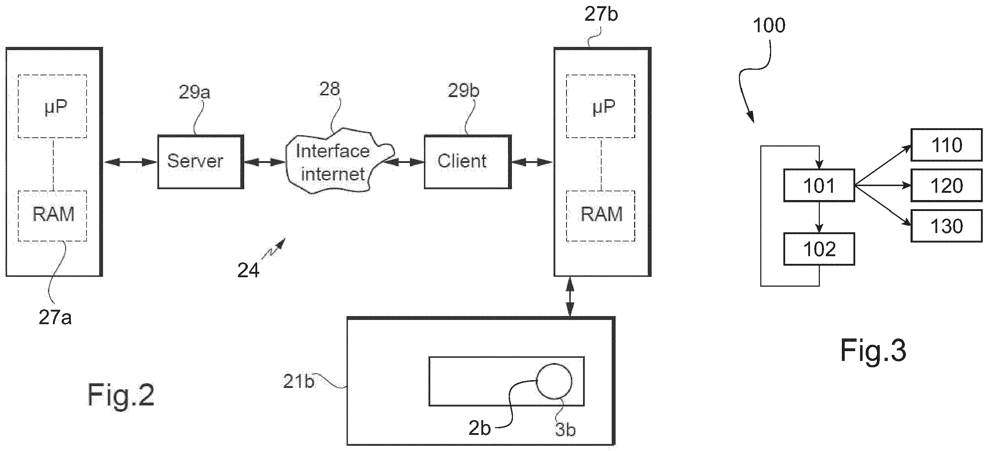

Figure 2 shows a client-server communication interface 24 comprising for instance a so-called supplier side 29a and another, so-called client side 29b, and these two sides communicating via an internet interface 28.

The supplier side comprises a server 29a linked to a data processing system or a command and control unit 27a of the same type as that in Figure 1, this server 29a being configured to communicate with the internet interface 28.

The client side 29b is configured to communicate with the internet interface 28, and is linked to a data processing system or a command and control unit 27b of the same type as that of the supplier side.

Furthermore, the command and control unit 27b on the client-side is linked to a manufacturing system 1b of the same type as that in Figure 1 for manufacturing an ophthalmic device 2b layer 3b by layer 3b.

For instance, the command and control unit 27b on the client-side is configured for receiving by a user some parameters about the ophthalmic device to be machined and about the manufacturing method intended to be implemented for additively manufacturing the ophthalmic device 2b.

The command and control unit 27b on the client-side, using the internet 28 and server 29a interface, sends the data received to the command and control unit 27a on the supplier-side for the determination of a manufacturing file and operational parameters.

The command and control unit 27a on the supplier-side executes the computer program that it contains in order to implement some steps of the method for additively manufacturing the ophthalmic device.

Using the server 29a and the internet interface 28, the command and control unit 27a on the supplier-side sends the manufacturing file and operational parameters, to the command and control unit 27b on the client side.

The command and control unit 27b on the client side is here configured to execute software for implementing the other steps of the method for additively manufacturing the ophthalmic device.

In variant, the manufacturing system can be located on the supplier side so that the command and control unit on the supplier side is configured both to determine the manufacturing file and operational parameters and to additively manufacture the ophthalmic device.

Figure 3 is a block diagram showing the main steps of the method for additively manufacturing ophthalmic devices 2 carried out thanks to the manufacturing system 1 as described above.

The method comprises successive steps 100 of additively manufacturing the plurality of layers 3 of the predetermined material 11, layer by layer.

The main steps of the method here comprises iteratively steps of layering 101 and steps of curing 102 in order to form, layer by layer, the ophthalmic devices 2.

The steps of layering 101 are carried out for locating the parts of the manufacturing system, including at least the building platform 20, the transparent plate 21 and the flexible separation film 22, in a building position in which only a predetermined thickness of the predetermined material 11 is provided between the flexible separation film 22 and the building platform 20 or a layer already formed thereon. The predetermined thickness of the predetermined material 11 corresponds to the thickness of the layer, when cured, to be formed.

During the layering step, the volume of the predetermined material can be the same for each layer.

The steps of layering 101 may comprise the step 110 of moving the building platform 20 in a predetermined position, and/or the step 120 of moving the frame 30 to which the flexible separation film 22 is mechanically fastened, relative to the building platform 20, and/or the step 130 of moving the transparent plate 21 relative to the building platform 20 and/or relative to the frame 30 to which the flexible separation film 22 is mechanically fastened.

The curing steps 102 comprise the steps of projecting and polymerizing at least one image on the surface 13 of the volume of the predetermined material 11 in the tank 10, through the transparent plate 21 and the flexible separation film 22 laying on the transparent plate 21 and being in contact therewith.

The curing steps 102 encompass the projection of a single image in a single direction toward the material 11, for instance thanks to the projecting apparatus 14, or the projection of a plurality of images projected simultaneously of successively. Such a process is usually called DLP process.

In variant, the step of projecting an image encompasses the scanning by a laser source of the surface of the material. Such a process is usually called SLA process.

Each layer 3 of the ophthalmic device 2 is formed, or layered, and at least partially hardened by curing, on the building platform 20 or on a previous layer on this platform, in a location wherein the layer 3 is sandwiched between the building platform 20 or the previous layer and the flexible separation film 22.

It is to be noted that for at least one image, the method may comprise a step of varying a polymerization energy during curing, the gradient being spatial on the image or temporal during a time exposure of the image.

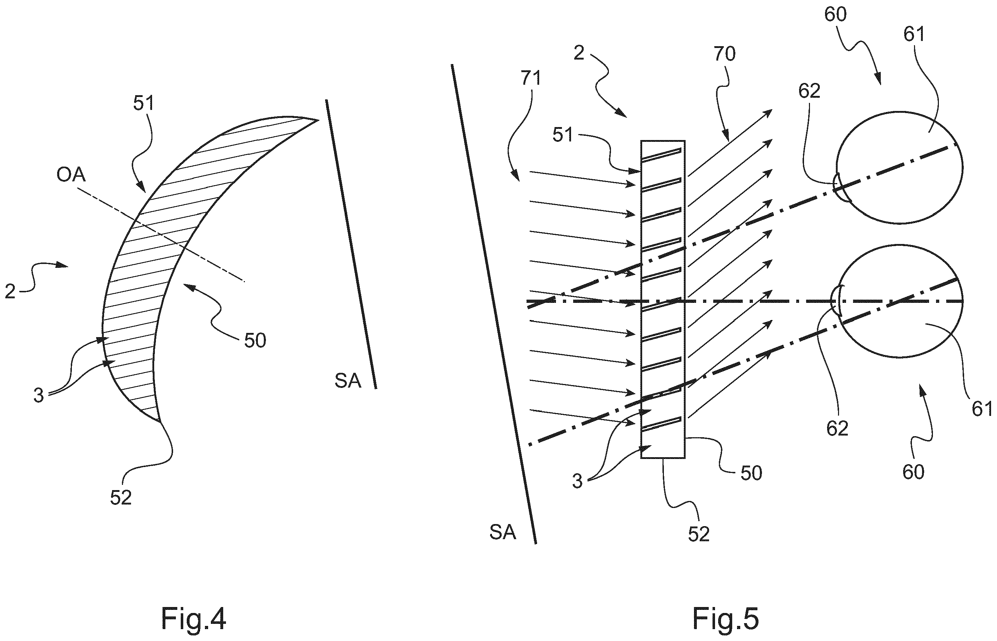

Figures 4 to 6 show the orientation of the ophthalmic device 2 during the build thereof.

The ophthalmic device 2 has a first face 50 which is oriented at least downward, a second face 51 opposite to the first face 50, which is oriented at least upward, and an outline 52 joining the first face 50 and the second face 51.

In reference to the above description of the system, the ophthalmic device 2 has here the first face 50 facing the additive unit 12.

The ophthalmic device 2 is here built vertically and in an inclined manner.

As explained above, the substantially vertically and inclined build of the ophthalmic device 2 means that the latter is not built substantially horizontally from its first face 50 to the second face 51.

The layers 3 of the predetermined material are superimposed along a stratification axis SA which is substantially vertical, and the ophthalmic device 2 comprises an optical axis OA through an optical center OC of the ophthalmic device 2 and distinct to the stratification axis SA.

The optical axis OA is inclined, but not perpendicular, relative to the stratification axis SA.

In other words, the layers 3 are built according to a build inclination angle here located between the optical axis OA and the stratification axis SA, and which is defined either relative to the stratification axis SA according to which the layers 3 are built or relative to the optical axis OA of the ophthalmic device 2 to be manufactured.

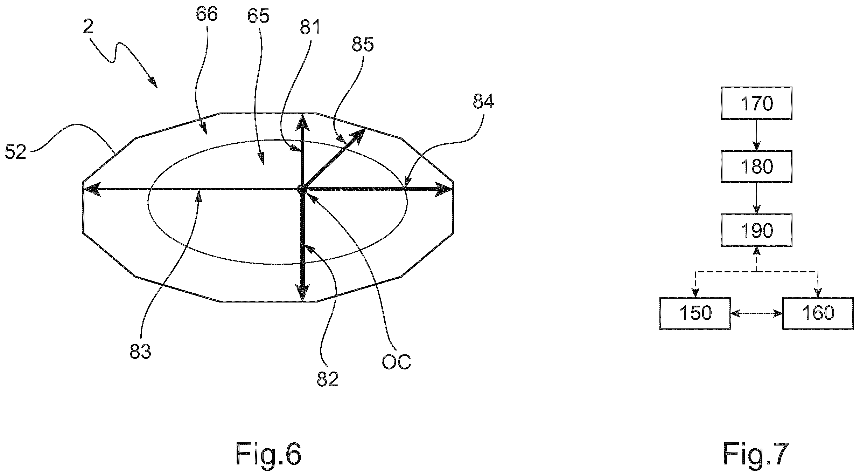

The ophthalmic device 2 is configured to be worn by a wearer 60, which mainly uses a main vision zone 65 of the ophthalmic device 2 (see Figure 6). The main vision zone 65 is not a single vision but rather the zone which is the most used by the wearer in its field of view.

The main vision zone 65 extends around the optical center OC of the ophthalmic device 2.

However, the users can also look on a peripheral zone 66 of the ophthalmic device 2, which extends between the main vision zone 65 and the outline 52.

The outline 52 in Figure 4 an intermediate contour of the ophthalmic device 2, while the outline 52 in Figures 5 and 6 represent a final contour of the ophthalmic device 2.

The difference between the intermediate contour and the final contour corresponds to an edging of the ophthalmic device 2 to conform its outline 52 to a frame of spectacle lenses intended to be worn by the wearer and in which is mounted the ophthalmic device 2.

In other words, as for any ophthalmic device, the ophthalmic device 2 comprises a main vision zone 65 expected to receive more than 75% of gaze directions of the wearer when the wearer uses the ophthalmic device 2 mounted in spectacle frames and a peripheral zone 66, expected to receive less than 20% of the gaze directions.

Therefore, the build inclination angle is determined so that the diffracted rays 70 of the beam of light 70, which would disturb the vision of the wearer, would come from an area located closed to or outside the outline 52.

Said otherwise, the build inclination angle is determined so that to direct the disturbing diffracted rays 70 of a beam of light 71 on a dedicated zone outside a pupil 62 of an eye 61 of the wearer 60, and thus at least outside of zones a retina of the eye 61 useful for clear vision.

Based on the above, the disturbing diffracted rays 70 of the beam of light 70 would come from the peripheral zone 66 of the ophthalmic device 2 extending close to the intermediate contour and outside the main vision zone 65 used by the wearer.

In other words, the disturbing diffracted rays 70 that would reach a zone of the eyes (or the eyes as such) that would hinder the wearer, would have to be generated from the area located outside the final contour as it is intended to be worn by the wearer, if one extrapolate such rays from angles of the diffracted rays generated by the ophthalmic device 2.

Accordingly, as the disturbing diffracted rays 70 would have to be generated from an area outside the final contour of the ophthalmic device 2, thanks to the determination of the build inclination angle, also called determined building orientation, said rays are not formed in the manufactured ophthalmic device 2.

Figure 5 shows that thanks to the additive manufacturing of the layers 3 according to a build inclination angle, the diffracted rays 70 formed within the manufactured ophthalmic device 2, once mounted in a frame, are not directed on the pupil 62 of the eye 61 of the wearer 60, both in case the wearer 60 looks at the main vision zone 65 (illustrated by the lower eye on the drawing) and at the peripheral zone 66 (illustrated by the upper eye on the drawing).

In addition, the stratification axis, which corresponds to a building direction of the ophthalmic device 2 extends substantially vertically and is along a diameter or a profile of the lens and not along its thickness.

It is thus further possible to determine and/or deduce an angular orientation location of the ophthalmic device 2 to be manufactured, which is defined around the optical axis OA through the optical center OC.

For instance, the angular orientation can be determined such that the ophthalmic device is built from a lower part to an upper part corresponding respectively to a bottom and a top of the device when mounted in a frame of spectacle lenses, or inversely, or from a nasal part to a temporal, or inversely, or from a part to another part located therebetween.

To be noted that the final contour of the ophthalmic device has often a shape which is not a circle centered on the optical center thereof.

In addition, the ophthalmic device may often include an optical power comprising non-spherical orders, such as for progressive addition or aspherisation or astigmatism correction.

The building angle may thus depend on the angular orientation.

Indeed, some angular orientations of the ophthalmic device may enable to have the dedicated zone from which some disturbing diffractive rays would come from, in a virtual zone outside the final contour with a building angle which smaller or larger than other angular orientations.

One may then chose the angular orientation best suitable for one's process and the expected quality of the ophthalmic device which is manufactured, thus enabling a further degree of freedom for the building strategy thereof.

In Figure 6, the ophthalmic device 2 is considered in front of the eye of the wearer and a plurality of arrows 81 to 84 define the outline 52, corresponding to the final contour and which can be equated to the field of view of the wearer.

The final contour of ophthalmic device 2, corresponds to a shape matching to the frame of the spetacle lenses.

The optical center OC is here coincident with the position of an eye rotation center of the wearer.

Arrow 81 corresponds to a top direction, also equated to a negative alpha angle, from the optical center OC, arrow 82 to a bottom direction, also equated to a positive alpha angle from the optical center OC, arrow 83 to temporal direction, also equated to a temporal beta angle from the optical center OC, and arrow 84 to a nasal direction, also equated to a nasal beta angle from the optical center OC.

Arrow 85 here corresponds to a top-nasal direction defined between the optical center OC and the frame edge, also equated to a combination of alpha and beta angle.

Said otherwise, in addition to the build inclination angle, it is possible to select a building orientation of the layers 3 of the ophthalmic device 2, the building orientation being for instance illustrated by the arrow 85 starting from the optical center and directing towards the outline 52.

In addition, the method may comprise a step of additively manufacturing a support (not illustrated) on which the ophthalmic device 2 can be built vertically and in an inclined manner, the support comprising a maintaining face which may have an inclination angle relative to the stratification axis which is function of the build inclination angle.

As shown in Figure 7, the method comprises a step 150 of determining the build inclination angle at least in function of:
- geometrical characteristics relating to an optical function of the ophthalmic device 2 to be manufactured; and/or
- geometrical characteristics relating to a final outline of the ophthalmic device 2 to be manufactured; and/or
- geometrical characteristics relating to a thickness of the layers 3; and/or
- parameters of the predetermined material, such as indicia and/or composition thereof.

To be noted that the difference between the outline and the final contour corresponds to an edging of the ophthalmic device 2 to conform its outline to a frame of spectacle lenses worn by the wearer 60 and in which is mounted the ophthalmic device 2.

In variant, the ophthalmic device 2 can be formed directly with the outline corresponding of the final contour, thus avoiding such edging.

It is to be noted that the step of determining the build inclination angle may comprise the step of determining at least one threshold angle value, or a range of values, according to which disturbing diffracted rays avoid the pupil 62 of the eye 61 of the wearer 60, and then the build inclination angle has a value upper or lower than the at least one threshold angle value and/or is outside the range of angle values.

The method may further comprise a step 160 of determining the angular orientation of the ophthalmic device 2 to be manufactured, defined around the optical axis OA through the optical center OC, at least in function of similar parameters as mentioned above, namely :
- geometrical characteristics relating to an optical function of the ophthalmic device 2 to be manufactured; and/or
- geometrical characteristics relating to a final outline of the ophthalmic device 2 to be manufactured; and/or
- geometrical characteristics relating to a thickness of the layers 3; and/or
- parameters of the predetermined material, such as refractive index and/or composition thereof.

The method may further comprise a step 170 of selecting at least one build inclination angle and a step 180 of determining at least one virtual zone on the ophthalmic device 2 to be manufactured wherein the disturbing diffracted rays of the beam of light come from.

The at least one virtual zone includes at least a region of interest located in the close vicinity of or outside a final contour of the ophthalmic device 2 to be manufactured.

The region of interest is preferably defined outside a field vision, or field of view, of the wearer.

In other words, the goal is to determine and select the direction(s) where the disturbing diffracted rays of the beam of light can be rejected so that not to be visible by the wearer.

Then, the method may further comprise a step 190 of deducing an angular orientation of the ophthalmic device 2 to be manufactured from the region of interest, corresponding to a selected build inclination angle.

Of course, when no virtual zone complies, that is to say allows to select a build inclination angle, a further determination is made departing from another (hypothetic) build inclination angle.

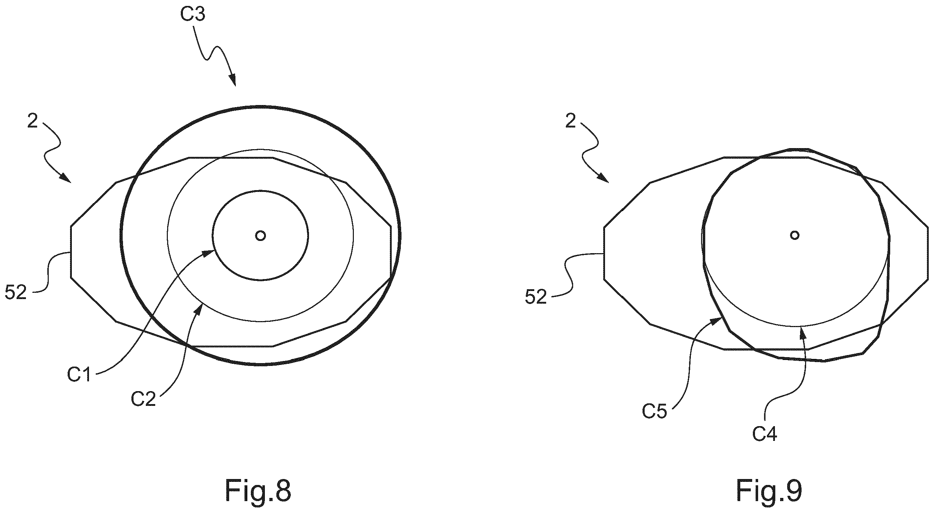

Figures 8 and 9 illustrate some steps disclosed in Figure 7.

Figure 8 shows an example of the ophthalmic device 2 to be manufactured which is a plano lens, that is to say that the optical function is null.

A plurality of shapes, here represented as circles, C1, C2 and C3 represent virtual zones on the ophthalmic device 2 to be manufactured corresponding to locations where the diffracted rays of the beam of light would be emitted in a direction of the retina of the wearer, while the surface of the ophthalmic device 2 corresponds generally to the field visions of the wearer 2.

In particular, the build inclination angle corresponding to the circle C1 is equal to 0°. We can see that there is no way in this case to have diffracted rays 70 of the beam of light 71 extending from an area located closed to or outside the outline, and thus to direct rays 70 of the beam of light 71 on a dedicated zone located outside the pupil 62 of the eye 61 of the wearer 60 when the ophthalmic device is worn by the wearer.

In contrast, the build inclination angle corresponding to the circle C2 is different and here equal to around 10°. We can see that a portion of the circle C2 is located outside the final contour, thus defining a region of interest as a source of the diffracted light that would be detrimental to the acuity.

In addition to the build inclination angle, it can be deduced an angular (building) orientation of the ophthalmic device 2 to be manufactured to have diffracted rays 70 of the beam of light 71 extending from an area located outside the outline, and thus to direct rays 70 of the beam of light 71 on a dedicated zone located outside the pupil 62 of the eye 61 of the wearer 60 when the ophthalmic device is worn by the wearer.

In addition, the build inclination angle corresponding to the circle C3 is greater and here equal to around 15°. We can see that a large portion of the circle C3 is located outside the outline 52, thus defining a large region of interest from which it can be deduced a large range of angular (building) orientations of the ophthalmic device 2 to be manufactured to have diffracted rays 70 of the beam of light 71 extending from an area located outside the outline, and thus to direct rays 70 of the beam of light 71 on a dedicated zone located outside the pupil 62 of the eye 61 of the wearer 60 when the ophthalmic device is worn by the wearer, and that is not detrimental to the acuity of the field of view.

Figure 9 shows another example of the ophthalmic device 2 to be manufactured which is here a progressive addition lens, also called PAL, that is to say that the optical function is complex, for instance having zero power for far vision and positive addition for near vision.

A plurality of shapes C4 and C5 represent virtual zones on the ophthalmic device 2 to be manufactured corresponding to locations where the diffracted rays of the beam of light would be emitted in a direction of the retina of the wearer, while the surface of the ophthalmic device 2 corresponds generally to the field visions of the wearer 2.

In particular, the build inclination angle corresponding to the shape C4 is equal to 0°. We can see that there is no way in this case to have diffracted rays 70 of the beam of light 71 extending from an area located closed to or outside the outline, and thus to direct rays 70 of the beam of light 71 on a dedicated zone located outside the pupil 62 of the eye 61 of the wearer 60 when the ophthalmic device is worn by the wearer.

In contrast, the build inclination angle corresponding to the shape C5 is different and here equal to around 10°. We can see that a portion of the shape C5 is located outside the outline 52, thus defining a region of interest from which it can be deduced an angular orientation of the ophthalmic device 2 to be manufactured to have diffracted rays 70 of the beam of light 71 extending from an area located outside the outline, and thus to direct rays 70 of the beam of light 71 on a dedicated zone located outside the retina 62 of the eye 61 of the wearer 60 when the ophthalmic device is worn by the wearer, and that is not detrimental to the acuity of the field of view.

In the method according to the above disclosure, the determination of the build inclination angle allows to direct disturbing diffracted rays of light that is generated in the ophthalmic device by a stacking of layers in the dedicated zone where the vision of the wearer is not impacted by these rays and/or wherein these rays do not hinder the wearer.

In this respect, the dedicated zone is generally at least outside the retina of the eye of the wearer, taking into account that the retina as such is not at all useful for clear vision.

Said otherwise, the dedicated zone is in particular at least outside aones of the retina useful for clear vision.

More particularly, the dedicated zone can be outside a pupil of the eye of the wearer.

The dedicated zone can also be outside of the eye of the wearer as such.

The disturbing diffracted rays of light that are "redirected" are rays generated in the ophthalmic device by a stacking of layers.

These disturbing rays, which would reach the retina, or at least zones of the retina useful for clear vision or pupil of the eye, if they were not "redirected", would come from a virtual region of the ophthalmic device located outside an outline of the ophthalmic device.

Indeed, additively manufacturing the ophthalmic device layer by layer may imply some optical defects in some directions and which may create vision distortions.

The optical defects discussed here may be generated between the successive layers which are superimposed one to each other, not essentially between individual and adjacent volume elements, or voxels.

The inventors found that such optical defects might be due to a repetitive refractive index inhomogeneity at the junction of the layers.

In other words, a diffraction effect may thus appear, possibly leading to multiple diffractive orders in the ophthalmic device.

Some of these diffraction orders may have low intensity, being not perceived by human eye or only barely, while some of them may provide strong energy that will create strong visual distortion.

It is thus thought that the build by layering may create a diffractive structure generating optical defects.

Therefore, it is the goal of the method according to the disclosure to mitigate some optical defects, in particular the vision distortions generated by diffracted effects, formed inherently by the additive manufacturing of the ophthalmic device.

It is to be noted that in the method according to the disclosure, the optical defects are not deleted but hidden totally or at least partially for the wearer of the ophthalmic device.

In other words, the method according to the disclosure allows to direct the disturbing diffracted beam of light so that not to impact the vision of the wearer of the ophthalmic device.

The disturbing diffracted rays of a beam of light would come from a peripheral zone of the ophthalmic device extending close to the intermediate contour and outside a main vision zone used by the wearer.

In other words, the disturbing diffracted rays that would reach a zone of the eyes (or the eyes as such) that would hinder the wearer, would have to be generated from the area located outside the final contour as it is intended to be worn by the wearer, if one extrapolate such rays from angles of the diffracted rays generated by the ophthalmic device.

Accordingly, as the disturbing diffracted rays would have to be generated from an area outside the final contour of the ophthalmic device, thanks to the determination of the build inclination angle, also called determined building orientation, said rays are not formed in the manufactured ophthalmic device.

To be noted that the ophthalmic device is an ophthalmic lens for spectacles lenses adapted for a wearer and having ophthalmic properties.

To be noted also that the additive manufacturing method can be carried out according to any existing suitable technology, such as for instance technologies included in the definition given by the reference ISO/ASTM 52900:2021, or corresponding references.

It should be noted more generally that the disclosure is not limited to the examples described and represented.

## Claims

1. Method for additively manufacturing an ophthalmic device (2, 2b) to be worn by a wearer (60), the ophthalmic device being an ophthalmic lens for spectacles lenses and the method comprising: additively manufacturing a plurality of layers (3, 3b) of a predetermined material (11) in order to obtain the ophthalmic device, and determining (150) a build inclination angle so that to direct disturbing diffracted rays (70) of a beam of light (71) on a dedicated zone located outside at least a zone of a retina of an eye (61) of the wearer useful for vision when the ophthalmic device (2, 2b) is worn by the wearer.

2. Method according to claim 1, wherein determining (150) the build inclination angle comprises determining at least one threshold angle value according to which disturbing diffracted rays avoid the zone of the retina of the eye (61) of the wearer useful for vision.

3. Method according to claim 2, wherein the build inclination angle has a value upper or lower than the at least one threshold angle value.

4. Method according to any one of claims 1 to 3, wherein the dedicated zone is located outside the eye (61) of the wearer.

5. Method according to one of claims 1 to 4, comprising: additively manufacturing the plurality of layers (3, 3b) of the predetermined material (11) in order to obtain the ophthalmic device (2, 2b) having an outline (52) joining a first face (50) and a second face (51) opposite to the first face, and determining (150) the build inclination angle so that the diffracted rays (70) of the beam of light (71), that would reach the retina, would come from an area located closed to or outside the outline (52).

6. Method according to claim 5, wherein the area is located outside a final contour of the ophthalmic device (2, 2b) as it is intended to be worn by the wearer.

7. Method according to any one of claims 1 to 6, wherein additively manufacturing a plurality of layers (3, 3b) of a predetermined material (11) is made substantially vertically along a stratification axis (SA) and in an inclined manner so that the ophthalmic device (2, 2b) to be manufactured comprises an optical axis (OA) through an optical center (OC) and distinct to the stratification axis.

8. Method according to claim 7, wherein the build inclination angle is here located between the optical axis (OA) and the stratification axis (SA) and is defined either relative to the stratification axis according to which the layers (3, 3b) are built or relative to the optical axis of the ophthalmic device (2, 2b) to be manufactured.

9. Method according to any one of claims 1 to 8, comprising determining (150) the build inclination angle at least in function of geometrical characteristics relating to an optical function of the ophthalmic device (2, 2b) to be manufactured, and/or geometrical characteristics relating to a final contour of the ophthalmic device to be manufactured, and/or geometrical characteristics relating to a thickness of the layers (3, 3b), and/or parameters of the predetermined material (11), such as refractive index and/or composition thereof.

10. Method according to any one of claims 1 to 9, comprising determining (160) an angular orientation of the ophthalmic device (2, 2b) to be manufactured, defined around an optical axis (OA) through an optical center (OC) of the ophthalmic device, at least in function of geometrical characteristics relating to an optical function of the ophthalmic device to be manufactured, and/or geometrical characteristics relating to a final contour of the ophthalmic device (2, 2b) to be manufactured, and/or geometrical characteristics relating to a thickness of the layers (3, 3b), and/or parameters of the predetermined material (11), such as refractive index and/or composition thereof.

11. Method according to any one of claims 1 to 10, comprising selecting (170) at least one build inclination angle and determining (180) at least one virtual zone on the ophthalmic device (2, 2b) to be manufactured wherein the diffracted rays (70) of the beam of light (71) are directed, the at least one virtual zone including a region of interest located in the close vicinity of or outside a final contour of the ophthalmic device (2, 2b) to be manufactured.

12. Method according to claim 11, comprising deducing (190) an angular orientation of the ophthalmic device (2, 2b) to be manufactured from the region of interest, corresponding to a selected build inclination angle.

13. A manufacturing system comprising an additive manufacturing module and a command and control unit (27, 27a, 27b) including system elements configured to run a computer program in order to implement a method for additively manufacturing an ophthalmic device (2, 2b) to be worn by a wearer (60), the ophthalmic device being an ophthalmic lens for spectacles lenses and the method comprising: additively manufacturing a plurality of layers (3, 3b) of a predetermined material (11) in order to obtain the ophthalmic device, and determining (150) a build inclination angle so that to direct disturbing diffracted rays (70) of a beam of light (71) on a dedicated zone located outside at least a zone of a retina of an eye (61) of the wearer useful for vision when the ophthalmic device (2, 2b) is worn by the wearer.

14. Computer program including instructions configured to implement a method for additively manufacturing an ophthalmic device (2, 2b) to be worn by a wearer (60), the ophthalmic device being an ophthalmic lens for spectacles lenses and the method comprising: additively manufacturing a plurality of layers (3, 3b) of a predetermined material (11) in order to obtain the ophthalmic device, and determining (150) a build inclination angle so that to direct disturbing diffracted rays (70) of a beam of light (71) on a dedicated zone located outside at least a zone of a retina of an eye (61) of the wearer useful for vision when the ophthalmic device (2, 2b) is worn by the wearer, when said computer program is run in a command and control unit (27, 27a, 27b) of a manufacturing system according to claim 13.

15. Client-server communication interface for transferring to a remote computer of the client-server communication interface (24), at least manufacturing data, such as a determined build inclination angle, which are determined by a computer program that implements, when said computer program is run in a command and control unit (27a, 27b) of the client-server communication interface (24), at least a part of a method for additively manufacturing an ophthalmic device (2, 2b) to be worn by a wearer (60), the ophthalmic device being an ophthalmic lens for spectacles lenses and the method comprising: additively manufacturing a plurality of layers (3, 3b) of a predetermined material (11) in order to obtain the ophthalmic device, and determining (150) the build inclination angle so that to direct disturbing diffracted rays (70) of a beam of light (71) on a dedicated zone located outside at least a zone of a retina of an eye (61) of the wearer useful for vision when the ophthalmic device (2, 2b) is worn by the wearer, the remote computer implementing the other steps of such additive manufacturing method, at least one of the remote computer and the command and control unit of the client-server communication interface being of a command and control unit of a manufacturing system according to claim 13.

## Patentansprüche

1. Verfahren zum additiven Herstellen einer ophthalmischen Vorrichtung (2, 2b), die durch einen Träger (60) getragen werden soll, wobei die ophthalmische Vorrichtung eine ophthalmische Linse für Brillengläser ist und wobei das Verfahren Folgendes umfasst: additives Herstellen mehrerer Schichten (3, 3b) eines vorbestimmten Materials (11), um die ophthalmische Vorrichtung zu erhalten, und Bestimmen (150) eines Aufbauneigungswinkels, so dass störende gebeugte Strahlen (70) eines Lichtstrahlbündels (71) auf eine dedizierte Zone gelenkt werden, die sich außerhalb wenigstens einer Zone einer Netzhaut eines Auges (61) des Trägers befindet, die für das Sehen nützlich ist, wenn die ophthalmische Vorrichtung (2, 2b) durch den Träger getragen wird.

2. Verfahren nach Anspruch 1, wobei das Bestimmen (150) des Aufbauneigungswinkels Bestimmen wenigstens eines Schwellenwinkelwertes umfasst, gemäß dem störende gebeugte Strahlen die Zone der Netzhaut des Auges (61) des Trägers, die für das Sehen nützlich ist, vermeiden.

3. Verfahren nach Anspruch 2, wobei der Aufbauneigungswinkel einen Wert oberhalb oder unterhalb des wenigstens einen Schwellenwinkelwertes aufweist.

4. Verfahren nach einem der Ansprüche 1 bis 3, wobei sich die dedizierte Zone außerhalb des Auges (61) des Trägers befindet.

5. Verfahren nach einem der Ansprüche 1 bis 4, welches Folgendes umfasst: additives Herstellen der mehreren Schichten (3, 3b) des vorbestimmten Materials (11), um die ophthalmische Vorrichtung (2, 2b) mit einem Umriss (52) zu erhalten, der eine erste Fläche (50) und eine zweite Fläche (51) gegenüber der ersten Fläche verbindet, und Bestimmen (150) des Aufbauneigungswinkels, so dass die gebeugten Strahlen (70) des Lichtstrahlbündels (71), die die die Netzhaut erreichen würden, von einem Bereich kommen würden, der nahe oder außerhalb des Umrisses (52) lokalisiert ist

6. Verfahren nach Anspruch 5, wobei der Bereich außerhalb einer finalen Kontur der ophthalmischen Vorrichtung (2, 2b) lokalisiert ist, wie sie durch den Träger getragen werden soll.

7. Verfahren nach einem der Ansprüche 1 bis 6, wobei das additive Herstellen mehrerer Schichten (3, 3b) eines vorbestimmten Materials (11) im Wesentlichen vertikal entlang einer Schichtungsachse (SA) und auf eine geneigten Weise erfolgt, so dass die herzustellende ophthalmische Vorrichtung (2, 2b) eine optische Achse (OA) durch ein optisches Zentrum (OC) und verschieden von der Schichtungsachse umfasst.

8. Verfahren nach Anspruch 7, wobei der Aufbauneigungswinkel hier zwischen der optischen Achse (OA) und der Schichtungsachse (SA) liegt und entweder relativ zu der Schichtungsachse, gemäß der die Schichten (3, 3b) aufgebaut werden, oder relativ zu der optischen Achse der herzustellenden ophthalmischen Vorrichtung (2, 2b) definiert ist.

9. Verfahren nach einem der Ansprüche 1 bis 8, das Bestimmen (150) des Aufbauneigungswinkels wenigstens als Funktion von geometrischen Charakteristiken bezüglich einer optischen Funktion der herzustellenden ophthalmischen Vorrichtung (2, 2b) und/oder geometrischen Charakteristiken bezüglich einer finalen Kontur der herzustellenden ophthalmischen Vorrichtung und/oder geometrischen Charakteristiken bezüglich einer Dicke der Schichten (3, 3b) und/oder Parametern des vorbestimmten Materials (11), wie etwa eines Brechungsindex und/oder einer Zusammensetzung davon, umfasst.

10. Verfahren nach einem der Ansprüche 1 bis 9, das Bestimmen (160) einer Winkelorientierung der herzustellenden ophthalmischen Vorrichtung (2, 2b), die um eine optische Achse (OA) durch ein optisches Zentrum (OC) der ophthalmischen Vorrichtung definiert ist, wenigstens als Funktion geometrischen Charakteristiken bezüglich einer optischen Funktion der herzustellenden ophthalmischen Vorrichtung und/oder geometrischen Charakteristiken bezüglich einer finalen Kontur der herzustellenden ophthalmischen Vorrichtung (2, 2b) und/oder geometrischen Charakteristiken bezüglich einer Dicke der Schichten (3, 3b) und/oder Parametern des vorbestimmten Materials (11), wie etwa eines Brechungsindex und/oder einer Zusammensetzung davon, umfasst.

11. Verfahren nach einem der Ansprüche 1 bis 10, das Auswählen (170) wenigstens eines Aufbauneigungswinkels und Bestimmen (180) wenigstens einer virtuellen Zone auf der herzustellenden ophthalmischen Vorrichtung (2, 2b) umfasst, wobei die gebeugten Strahlen (70) des Lichtstrahlbündels (71) gelenkt werden, wobei die wenigstens eine virtuelle Zone ein Gebiet von Interesse beinhaltet, das sich in der engen Nähe zu oder außerhalb einer finalen Kontur der herzustellenden ophthalmischen Vorrichtung (2, 2b) befindet.

12. Verfahren nach Anspruch 11, das das Ableiten (190) einer Winkelorientierung der herzustellenden ophthalmischen Vorrichtung (2, 2b) aus dem Gebiet von Interesse umfasst, entsprechend einem ausgewählten Aufbauneigungswinkel.

13. Herstellungssystem, das ein additives Herstellungsmodul und eine Befehls- und Steuereinheit (27, 27a, 27b) einschließlich Systemelemente umfasst, die dazu konfiguriert sind, ein Computerprogramm auszuführen, um ein Verfahren zum additiven Herstellen einer ophthalmischen Vorrichtung (2, 2b) zu implementieren, die durch einen Träger (60) getragen werden soll, wobei die ophthalmische Vorrichtung eine ophthalmische Linse für Brillengläser ist und wobei das Verfahren Folgendes umfasst: additives Herstellen mehrerer Schichten (3, 3b) eines vorbestimmten Materials (11), um die ophthalmische Vorrichtung zu erhalten, und Bestimmen (150) eines Aufbauneigungswinkels, so dass störende gebeugte Strahlen (70) eines Lichtstrahlbündels (71) auf eine dedizierte Zone gelenkt werden, die sich außerhalb wenigstens einer Zone einer Netzhaut eines Auges (61) des Trägers befindet, die für das Sehen nützlich ist, wenn die ophthalmische Vorrichtung (2, 2b) durch den Träger getragen wird.

14. Computerprogramm, das Anweisungen beinhaltet, die dazu konfiguriert sind, ein Verfahren zum additiven Herstellen einer ophthalmischen Vorrichtung (2, 2b) implementieren, die durch einen Träger (60) getragen werden soll, wobei die ophthalmische Vorrichtung eine ophthalmische Linse für Brillengläser ist und wobei das Verfahren Folgendes umfasst: additives Herstellen mehrerer Schichten (3, 3b) eines vorbestimmten Materials (11), um die ophthalmische Vorrichtung zu erhalten, und Bestimmen (150) eines Aufbauneigungswinkels, so dass störende gebeugte Strahlen (70) eines Lichtstrahlbündels (71) auf eine dedizierte Zone gelenkt werden, die sich außerhalb wenigstens einer Zone einer Netzhaut eines Auges (61) des Trägers befindet, die für das Sehen nützlich ist, wenn die ophthalmische Vorrichtung (2, 2b) durch den Träger getragen wird, wenn das Computerprogramm auf einer Befehls- und Steuereinheit (27, 27a, 27b) eines Herstellungssystems nach Anspruch 13 ausgeführt wird.

15. Client-Server-Kommunikationsschnittstelle zum Transferieren, an einen fernen Computer der Client-Server-Kommunikationsschnittstelle (24), wenigstens von Herstellungsdaten, wie etwa einem bestimmten Aufbauneigungswinkel, die durch ein Computerprogramm bestimmt werden, das, wenn das Computerprogramm auf einer Befehls- und Steuereinheit (27a, 27b) der Client-Server-Kommunikationsschnittstelle (24) ausgeführt wird, wenigstens einen Teil eines Verfahrens zum additiven Herstellen einer ophthalmischen Vorrichtung (2, 2b) implementiert, die durch einen Träger (60) getragen werden soll, wobei die ophthalmische Vorrichtung eine ophthalmische Linse für Brillengläser ist und wobei das Verfahren Folgendes umfasst: additives Herstellen mehrerer Schichten (3, 3b) eines vorbestimmten Materials (11), um die ophthalmische Vorrichtung zu erhalten, und Bestimmen (150) des Aufbauneigungswinkels, so dass störende gebeugte Strahlen (70) eines Lichtstrahlbündels (71) auf eine dedizierte Zone gelenkt werden, die sich außerhalb wenigstens einer Zone einer Netzhaut eines Auges (61) des Trägers befindet, die für das Sehen nützlich ist, wenn die ophthalmische Vorrichtung (2, 2b) durch den Träger getragen wird, wobei der ferne Computer die anderen Schritte eines solchen additiven Herstellungsverfahrens implementiert, wobei der ferne Computer und/oder die Befehls- und Steuereinheit der Client-Server-Kommunikationsschnittstelle von einer Befehls- und Steuereinheit eines Herstellungssystems nach Anspruch 13 ist.

## Revendications

1. Procédé de fabrication de manière additive d'un dispositif ophtalmique (2, 2b) à porter par un porteur (60), le dispositif ophtalmique étant une lentille ophtalmique pour verres de lunettes et le procédé comprenant : la fabrication de manière additive d'une pluralité de couches (3, 3b) d'un matériau prédéterminé (11) pour obtenir le dispositif ophtalmique, et la détermination (150) d'un angle d'inclinaison de construction de manière à diriger des rayons diffractés perturbateurs (70) d'un faisceau de lumière (71) sur une zone dédiée située en dehors d'au moins une zone d'une rétine d'un œil (61) du porteur, utile pour la vision lorsque le dispositif ophtalmique (2, 2b) est porté par le porteur.

2. Procédé selon la revendication 1, la détermination (150) de l'angle d'inclinaison de construction comprenant la détermination d'au moins une valeur d'angle seuil selon laquelle les rayons diffractés perturbateurs évitent la zone de la rétine de l'œil (61) du porteur, utile pour la vision.

3. Procédé selon la revendication 2, l'angle d'inclinaison de construction ayant une valeur supérieure ou inférieure à l'au moins une valeur d'angle seuil.

4. Procédé selon l'une quelconque des revendications 1 à 3, la zone dédiée étant située en dehors de l'œil (61) du porteur.

5. Procédé selon l'une des revendications 1 à 4, comprenant : la fabrication de manière additive de la pluralité de couches (3, 3b) du matériau prédéterminé (11) pour obtenir le dispositif ophtalmique (2, 2b) ayant un contour (52) raccordant une première face (50) et une seconde face (51) opposée à la première face, et la détermination (150) de l'angle d'inclinaison de construction de sorte que les rayons diffractés (70) du faisceau de lumière (71) qui atteindraient la rétine proviendraient d'une zone située à proximité ou en dehors du contour (52).

6. Procédé selon la revendication 5, la zone étant située en dehors d'un contour final du dispositif ophtalmique (2, 2b) lorsqu'il est destiné à être porté par le porteur.

7. Procédé selon l'une quelconque des revendications 1 à 6, la fabrication de manière additive d'une pluralité de couches (3, 3b) d'un matériau prédéterminé (11) étant réalisée sensiblement verticalement selon un axe de stratification (SA) et de manière inclinée de manière à ce que le dispositif ophtalmique (2, 2b) à fabriquer comprend un axe optique (OA) traversant un centre optique (OC) et distinct de l'axe de stratification.

8. Procédé selon la revendication 7, l'angle d'inclinaison de construction étant ici situé entre l'axe optique (OA) et l'axe de stratification (SA) et étant défini soit par rapport à l'axe de stratification selon lequel les couches (3, 3b) sont construites, soit par rapport à l'axe optique du dispositif ophtalmique (2, 2b) à fabriquer.

9. Procédé selon l'une quelconque des revendications 1 à 8, comprenant la détermination (150) de l'angle d'inclinaison de construction au moins en fonction de caractéristiques géométriques relatives à une fonction optique du dispositif ophtalmique (2, 2b) à fabriquer, et/ou de caractéristiques géométriques relatives à un contour final du dispositif ophtalmique à fabriquer, et/ou de caractéristiques géométriques relatives à une épaisseur des couches (3, 3b) et/ou de paramètres du matériau prédéterminé (11), tels que leur indice de réfraction et/ou leur composition.

10. Procédé selon l'une quelconque des revendications 1 à 9, comprenant la détermination (160) d'une orientation angulaire du dispositif ophtalmique (2, 2b) à fabriquer définie autour d'un axe optique (OA) traversant un centre optique (OC) du dispositif ophtalmique, au moins en fonction de caractéristiques géométriques relatives à une fonction optique du dispositif ophtalmique à fabriquer, et/ou de caractéristiques géométriques relatives à un contour final du dispositif ophtalmique (2, 2b) à fabriquer, et/ou de caractéristiques géométriques relatives à une épaisseur des couches (3, 3b), et/ou de paramètres du matériau prédéterminé (11), tels que leur indice de réfraction et/ou leur composition.

11. Procédé selon l'une quelconque des revendications 1 à 10, comprenant la sélection (170) d'au moins un angle d'inclinaison de construction et la détermination (180) d'au moins une zone virtuelle sur le dispositif ophtalmique (2, 2b) à fabriquer, les rayons diffractés (70) du faisceau de lumière (71) étant dirigés, l'au moins une zone virtuelle comprenant une région d'intérêt située au voisinage ou en dehors d'un contour final du dispositif ophtalmique (2, 2b) à fabriquer.

12. Procédé selon la revendication 11, comprenant la déduction (190) d'une orientation angulaire du dispositif ophtalmique (2, 2b) à fabriquer à partir de la région d'intérêt, correspondant à un angle d'inclinaison de construction sélectionné.

13. Système de fabrication comprenant un module de fabrication additive et une unité de contrôle et de commande (27, 27a, 27b) comprenant des éléments systémiques configurés pour exécuter un programme informatique pour la mise en œuvre d'un procédé de fabrication de manière additive d'un dispositif ophtalmique (2, 2b) à porter par un porteur (60), le dispositif ophtalmique étant une lentille ophtalmique pour verres de lunettes et le procédé comprenant : la fabrication de manière additive d'une pluralité de couches (3, 3b) d'un matériau prédéterminé (11) pour obtenir le dispositif ophtalmique, et la détermination (150) d'un angle d'inclinaison de construction de manière à diriger des rayons diffractés perturbateurs (70) d'un faisceau de lumière (71) sur une zone dédiée située en dehors d'au moins une zone d'une rétine d'un œil (61) du porteur, utile pour la vision lorsque le dispositif ophtalmique (2, 2b) est porté par le porteur.

14. Programme informatique comprenant des instructions configurées pour mettre en œuvre un procédé de fabrication de manière additive d'un dispositif ophtalmique (2, 2b) à porter par un porteur (60), le dispositif ophtalmique étant une lentille ophtalmique pour verres de lunettes et le procédé comprenant : la fabrication de manière additive d'une pluralité de couches (3, 3b) d'un matériau prédéterminé (11) pour obtenir le dispositif ophtalmique, et la détermination (150) d'un angle d'inclinaison de construction de manière à diriger des rayons diffractés perturbateurs (70) d'un faisceau de lumière (71) sur une zone dédiée située en dehors d'au moins une zone d'une rétine d'un œil (61) du porteur, utile pour la vision lorsque le dispositif ophtalmique (2, 2b) est porté par le porteur, lorsque ledit programme informatique est exécuté dans une unité de contrôle et de commande (27, 27a, 27b) d'un système de fabrication selon la revendication 13.

15. Interface de communication client-serveur pour le transfert vers un ordinateur distant de l'interface de communication client-serveur (24), d'au moins des données de fabrication, telles qu'un angle d'inclinaison de construction déterminé, déterminées par un programme informatique qui met en œuvre, lorsque ledit programme informatique est exécuté dans une unité de contrôle et de commande (27a, 27b) de l'interface de communication client-serveur (24), au moins une partie d'un procédé de fabrication de manière additive d'un dispositif ophtalmique (2, 2b) à porter par un porteur (60), le dispositif ophtalmique étant une lentille ophtalmique pour verres de lunettes et le procédé comprenant : la fabrication de manière additive d'une pluralité de couches (3, 3b) d'un matériau prédéterminé (11) pour obtenir le dispositif ophtalmique, et la détermination (150) de l'angle d'inclinaison de construction de manière à diriger des rayons diffractés perturbateurs (70) d'un faisceau de lumière (71) sur une zone dédiée située en dehors d'au moins une zone d'une rétine d'un œil (61) du porteur, utile pour la vision lorsque le dispositif ophtalmique (2, 2b) est porté par le porteur, l'ordinateur distant mettant en œuvre les autres étapes d'un tel procédé de fabrication additive, l'un au moins parmi l'ordinateur distant et l'unité de contrôle et de commande de l'interface de communication client-serveur étant d'une unité de contrôle et de commande d'un système de fabrication selon la revendication 13.
